# EUROPEAN PATENT APPLICATION

(11) **EP 4 675 872 A1**
(43) Date of publication of application: **07.01.2026**
(21) Application number: 24186025.3
(22) Date of filing: 02.07.2024
(51) Int. Cl.: H02G 5/00, H01R 11/01, H01R 4/02, H02G 15/08, B60R 16/02, H01R 4/70

(54) **A BUS BAR JOINT, A BUS BAR, A VEHICLE AND A METHOD**

(71) Applicant: VOLVO TRUCK CORPORATION, 405 08 Göteborg (SE)
(72) Inventor: Serra Dalmau, Albert, 416 72 Göteborg (SE); Irannezhad, Mike, 413 30 Göteborg (SE)
(74) Representative: Kransell & Wennborg KB

(57) **Abstract**

A bus bar joint (1) for high-current applications. The bus bar joint comprises a first bus bar portion (10) extending along a first center axis (A), the first bus bar portion (10) having a first joint end (14). The bus bar joint (1) further comprises a second bus bar portion (12) extending along a second center axis (B), the second bus bar portion (12) having a second joint end (16). A flexible electrically conductive joint element (18) mechanically and electrically connects the first joint end (14) to the second joint end (16). The first joint end (14) and the second joint (16) end are tapered ends of the first bus bar portion (10) and the second bus bar portion (12), respectively. The joint element (18) is configured to enable the first bus bar portion (10) and the second bus bar portion (12) to be movable in relation to each other.

## Description

### TECHNICAL FIELD

The disclosure relates generally to bus bars. In particular aspects, the disclosure relates to a bus bar joint, a bus bar, a vehicle and a method of manufacturing the bus bar joint. The disclosure can be applied to heavy-duty vehicles, such as trucks, buses, and construction equipment, among other vehicle types. The disclosure may also be applied to vessels, craft and stationary machinery, such as marine vessels or air craft. Although the disclosure may be described with respect to a particular vehicle, vessel, craft or machinery, the disclosure is not restricted to any such device.

### BACKGROUND

Connections between high-voltage components in vehicles, vessels and stationary machinery may be achieved by pre-shaped bus bars, which bus bars are relatively rigid to be able to handle high-currents. The bus bars are pre-shaped and customized for a particular routing. The high currents could be handled by cables, but multiple cables might be needed and cables also require a larger turning radius than bus bars and therefore also occupy more space than pre-shaped bus bars.

However, problems arise when components connected by bus bars move in relation to each other, or when vibrating, causing mechanical stress to the components. In addition, pre-shaped bus bars may require strict tolerances during assembly, when mounting with the connecting points of the components.

### SUMMARY

According to a first aspect of the disclosure, there is provided a bus bar joint for high-current/high-voltage applications. The bus bar joint comprises a first bus bar portion extending coaxially with a first axis A. The first bus bar portion has a first joint end. The bus bar joint further comprises a second bus bar portion extending coaxially with a second axis B. The second bus bar portion has a second joint end. The bus bar joint further comprises a flexible electrically conductive joint element mechanically and electrically connecting the first joint end of the first bus bar portion to the second joint end of the second bus bar portion. The first joint end and the second joint end are tapered ends of the first bus bar portion and the second bus bar portion, respectively. The joint element is configured to enable the first bus bar portion and the second bus bar portion to be movable in relation to each other.

The first aspect of the disclosure may seek to provide a flexible joint for a relatively rigid bus bar, resulting in that ends of the bus bar are easier to fit to connectors of components that are to be connected by the bus bar. In addition, the flexible joint allows relative movement and/or vibration of the connected components during operation of the interconnected components (after assembly), reducing mechanical strain and stress on the bus bar and the components.

In the context of this disclosure, "high-current" is understood to mean a nominal current of 100 to 500 amperes, where the nominal current is an operating current which the bus bar joint must be able to withstand for an extended period of time. Typically, the bus bar joint is able to withstand higher currents for shorter periods of time, such as above 1500 amperes during charging of an electric energy storage system in which the bus bar joint may be comprised.

In this disclosure, the term "high-voltage" refers to a system operating voltage of at least 200 volts, preferably above 400 volts, such as around 600 volts.

The first bus bar portion and the second bus bar portion are described in relation to the first axis and the second axis, respectively. It is herein to be understood that since the first bus bar portion and the second bus bar portion are movable in relation to each other, the first axis and the second axis are also movable in relation to each other. The first bus bar portion and the second bus bar portion may be pre-shaped, having individual shapes. In some examples only the joint ends of the bus bar portions extend coaxially with the first axis and the second axis, respectively.

Directions along the first and/or second axis may herein be defined as axial directions.

Directions towards and away from the first axis and/or the second axis may be defined as radial directions. A radially inner position is closer to the respective axis than a radially outer position.

The first bus bar portion and the second bus bar portion may comprise a solid conductor surrounded by an insulator. The first joint end and the second joint end are portions of the conductor that during manufacturing and assembly are exposed, i.e. where the insulator is removed, to allow assembly of the joint ends with the flexible joint element.

The flexible joint element is mounted between the first joint end of the first bus bar portion and the second joint end of the second bus bar portion. The respective opposite ends of the first bus bar portion and/or the second bus bar portion may be fitted with connectors for connecting to components. Alternatively, at least one of the opposite ends may be arranged with at least one further flexible joint element for attaching to a joint end of a further bus bar portion.

The first j oint end and the second j oint end are tapered ends of the respective conductor, which ends are formed, such as by machining, to have a gradually narrower cross section, as seen along the respective axis, towards a respective axial end of each bus bar portion. Thereby, more surface area of the conductor is exposed and provided, to which surface the flexible joint element may be attached, thereby simplifying attachment and providing a stronger assembly between the joint ends and the joint element.

Optionally, the bus bar joint is configured for a nominal current of at least 100 amperes.

Optionally in some examples, including in at least one preferred example, the joint element is fixedly attached to the tapered ends of the first bus bar portion and the second bus bar portion. As such, the joint element is permanently attached to the first bus bar portion and the second bus bar portion, providing a bus bar with flexible properties.

Optionally in some examples, including in at least one preferred example, the first bus bar portion and the second bus bar portion are rotationally movable in relation to each other by an angle between the first axis and the second axis. The angle may be a pivoting angle between the first axis and the second axis. The angle may also be a twisting angle, i.e. a twisting of the first bus bar portion and/or the second bus bar portion around its respective axis. The rotational and/or twisting movement enables degrees of freedom when fitting the bus bar, comprising the bus bar joint, to components.

Optionally in some examples, including in at least one preferred example, the joint element comprises a plurality of conductors attached to the tapered ends in layers. In order to enable the bus bar for high-current applications a total cross-sectional area, as seen along an axial course of the joint element, of the sum of cross-sectional areas of the conductors needs to exceed a minimum threshold area so as to not impede a current flow in the bus bar. The flexibility of the bus bar joint requires a plurality of relatively thin conductors, instead of a single conductor, to simultaneously enable a sufficient current flow. The particular total cross-sectional area required by the joint element for a predetermined nominal current, such as at least 100 amperes, may readily be determined by conventional methods.

Optionally in some examples, including in at least one preferred example, the tapered ends have a stepped profile and wherein the plurality of conductors are attached to the tapered ends in layers from a radially innermost lower step to a radially outermost higher step. The stepped profile provides flat surfaces which are particularly well suited for the attachment of the plurality of conductors.

Optionally in some examples, including in at least one preferred example, the tapered ends have a conical profile and wherein the plurality of conductors are attached to the tapered ends in layers from a radially innermost conically narrow part to a radially outermost conically broader part. The conical profile may enable greater flexibility when bending the joint element of the assembled bus bar.

Optionally in some examples, including in at least one preferred example, the joint element comprises a plurality of conductors attached to the tapered ends by fastening elements. As such the plurality of conductors of the joint element may be attached to the tapered ends by bolts, screws, rivets, or clamps, etc.

Optionally in some examples, including in at least one preferred example, the joint element comprises a plurality of conductors attached to the tapered ends by welding. Welding allows permanent attachment of the plurality of conductors.

Optionally in some examples, including in at least one preferred example, the plurality of conductors comprises braided bus bars. Braided bus bars are commercially available conductors which are woven/braided to form a flexible element. The joint element of the present disclosure may have a plurality of braided by bars attached to the tapered ends in layers.

Optionally in some examples, including in at least one preferred example, the plurality of conductors comprises lamella conductors. Conductive lamellas may be attached to form a flexible joint element. The joint element of the present disclosure may have a plurality of lamellas attached to the tapered ends in layers.

Optionally in some examples, including in at least one preferred example, the bus bar joint further comprises an electrically insulating sleeve positioned radially outside the joint element, the electrically insulating sleeve extending from the first bus bar portion to the second bus bar portion. The joint element and the tapered ends may be covered and electrically insulated from the surroundings by an electrically insulating sleeve. The electrically insulating sleeve may further seal the bus bar joint to keep water out of the joint.

Optionally in some examples, including in at least one preferred example, the bus bar joint further comprises a electrically conductive braided sleeve positioned radially outside the electrically insulating sleeve. The electrically conductive braided sleeve may provide electromagnetic protection of the joint. The braided sleeve is flexible and allows bending and twisting of the bus bar joint due to the braided design.

According to a second aspect of the disclosure, there is provided a method of manufacturing a bus bar joint comprising a first bus bar portion, a second bus bar portion and an electrically conductive joint element comprising a plurality of conductors. The first bus bar portion and the second bus bar portion extend coaxially with a first axis A and a second axis B, respectively. The first bus bar portion has a tapered first joint end. The second bus bar portion has a tapered second joint end. The method comprises attaching the plurality of conductors of the joint element between the tapered first joint end and the tapered second joint end.

Optionally in some examples, including in at least one preferred example, the method further comprises mounting a flexible electrically insulating sleeve radially outside the joint element. The electrically insulating sleeve extends from the first bus bar portion to the second bus bar portion.

The second aspect of the disclosure may seek to provide a method of manufacturing a flexible joint for a relatively rigid bus bar. The attachment of the plurality of conductors of the joint element is facilitated by the tapered ends of the first bus bar portion and the second bus bar portion.

Optionally in some examples, including in at least one preferred example, the plurality of conductors are sequentially attached in layers to the tapered first joint end and to the tapered second joint end, from a radially innermost layer to a radially outermost layer. A technical benefit may include that that the number of conductors comprised by the flexible joint may be increased because the tapered ends enable large surfaces for attachment. In addition, the tapering enables the conductors to be added in layers, thereby achieving a radially dense assembly of conductors, resulting in a larger total cross-sectional area of the plurality of conductors, which enables a sufficient current flow while simultaneously maintaining the flexibility of the bus bar joint. The particular total cross-sectional area required by the joint element for a predetermined nominal current, such as at least 140 amperes, may readily be determined by conventional methods.

Optionally in some examples, including in at least one preferred example, the plurality of conductors of the joint element are attached to the tapered first joint end and to the tapered second joint end by fastening elements. As such the plurality of conductors of the joint element may be attached to the tapered ends by bolts, screws, rivets, clamps, etc.

Optionally in some examples, including in at least one preferred example, the plurality of conductors of the joint element are attached to the tapered first joint end and to the tapered second joint end by welding. Welding allows permanent attachment of the plurality of conductors.

Optionally in some examples, including in at least one preferred example, the method further comprises gluing or welding or clamping the flexible electrically insulating sleeve to the first bus bar portion and to the second bus bar portion. A watertight permanent seal with the first bus bar portion and the second bus bar portion may thereby be achieved, resulting in a watertight and electrically insulating encapsulation of the flexible joint.

Optionally in some examples, including in at least one preferred example, the method further comprises mounting a flexible electrically conductive braided sleeve radially outside the electrically insulating sleeve. The electrically conductive braided sleeve may provide electromagnetic shielding of the joint. The braided sleeve is flexible and allows bending and twisting of the bus bar joint due to its braided design.

Optionally in some examples, including in at least one preferred example, the method further comprises visually marking the bus bar joint. The marking may indicate that the bus bar is a high voltage conductor. The marking may thereby serve as a warning, for instance for users performing service on the components to which the bus bar is connected.

According to a third aspect of the disclosure, there is provided a bus bar comprising at least one bus bar joint according to any one of the examples of the first aspect of the disclosure. The bus bar may comprise a plurality of bus bar portions connected by at least one bus bar joint according to the first aspect of the disclosure. The bus bar may thus comprise a plurality of flexible joints.

According to a fourth aspect of the disclosure, there is provided a vehicle, vessel or stationary machinery comprising the bus bar according to any one of the examples of the third aspect of the disclosure. The fourth aspect of the disclosure may seek to provide such a vehicle, vessel or stationary machinery where the bus bar according to the examples herein is easily installed and which allows relative movement of connected components without exposing the connection points or the components to undue mechanical stress.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2a-2b** is an exemplary bus bar joint according to an example.
**FIG. 3a-3b** is an exemplary bus bar joint according to an example.
**FIG. 4a-4b** is an exemplary bus bar joint according to an example.
**FIG. 5a-5b** is an exemplary joint element according to an example.
**FIG. 6** is an exemplary method according to an example.
**FIG. 7a-7d** are exemplary method steps according to an example.
**FIG. 8a-8b** is an exemplary bus bar according to an example.

### DETAILED DESCRIPTION

The detailed description set forth below provides information and examples of the disclosed technology with sufficient detail to enable those skilled in the art to practice the disclosure.

Components connected by bus bars in vehicles vessels and stationary equipment move in relation to each other, or when vibrating, causing mechanical stress to the components. In addition, pre-shaped bus bars may require strict tolerances during assembly, when mounting the ends of the bus bars to connecting points of the components.

The examples disclosed herein provide a flexible joint for a relatively rigid bus bar, resulting in that ends of the bus bar are easier to fit to connectors of components that are to be connected by the bus bar. In addition, the flexible joint allows relative movement and/or vibration of the connected components during operation of the interconnected components (after assembly), reducing mechanical strain and stress on the bus bar and the components. There is also provided a bus bar comprising at least one such bus bar joint and a method of manufacturing a bus bar comprising such a bus bar joint. The term "relatively rigid" bus bar as used herein may mean a bus bar comprising portions of a set rigidity such as by being of a set metal or metal alloy. A "flexible j oint" as used herein may mean a joint allowing relative movement of interconnected components such as bus bar portions.

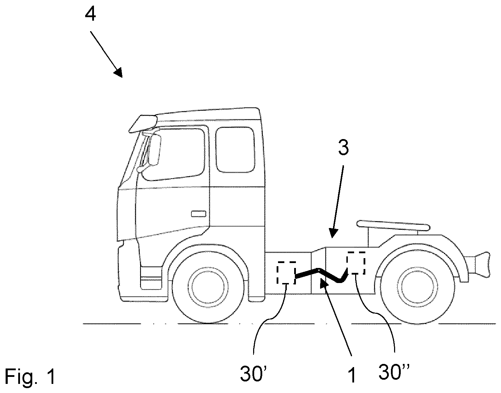

**Fig. 1** depicts a vehicle 4 according to the fourth aspect of the disclosure. The vehicle 4 comprises a bus bar 3 according to the third aspect of the disclosure. The bus bar comprises at least one bus bar joint 1 according to the first aspect of the disclosure. Instead of a vehicle 4, the bus bar may be comprised in a vessel 4 such a marine vessel, or in stationary machinery 4. The bus bar 3 electrically connects at least two components 30', 30" of the vehicle 4.

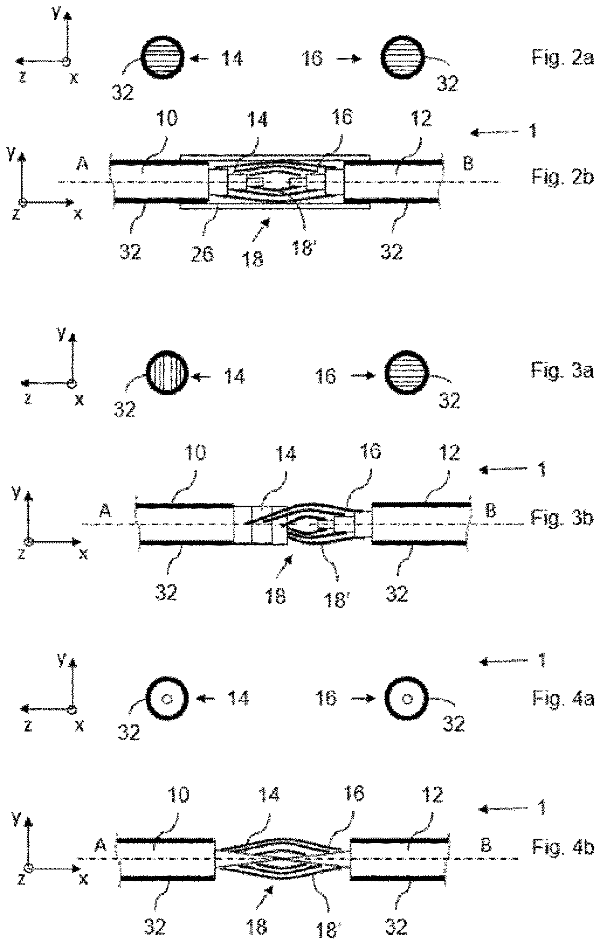

**Figs 2-4** show examples of bus bar joints 1 according to the first aspect of the disclosure. The bus bar joint 1 may be adapted for high-current/high-voltage applications. The bus bar joint 1 comprises a first bus bar portion 10 extending coaxially with a first axis A. The first bus bar portion 10 has a first joint end 14. The bus bar joint 1 further comprises a second bus bar portion 12 extending coaxially with a second axis B. The second bus bar portion 12 has a second joint end 16. The bus bar joint 1 further comprises a flexible electrically conductive joint element 18 mechanically and electrically connecting the first joint end 14 of the first bus bar portion 10 to the second joint end 16 of the second bus bar portion 12. The first j oint end 14 and the second joint 16 end are tapered ends of the first bus bar portion 10 and the second bus bar portion 12, respectively. The joint element 18 is configured to enable the first bus bar portion 10 and the second bus bar portion 12 to be movable in relation to each other. The first bus bar portion and the second bus bar portion may further be electrically insulated by a coating or insulator 32.

In the context of this disclosure, "high-current" is understood to mean a nominal current of 100 to 500 amperes, where the nominal current is an operating current which the bus bar joint 1 must be able to withstand for an extended period of time. Typically, the bus bar joint 1 is able to withstand higher currents for shorter periods of time, such as above 1500 amperes during charging of an electric energy storage system in which the bus bar joint 1 may be comprised. Accordingly, the bus bar joint 1 may be configured for a nominal current of at least 140 amperes.

In this disclosure, the term "high-voltage" refers to a system operating voltage of at least 200 volts, preferably above 400 volts, such as around 600 volts.

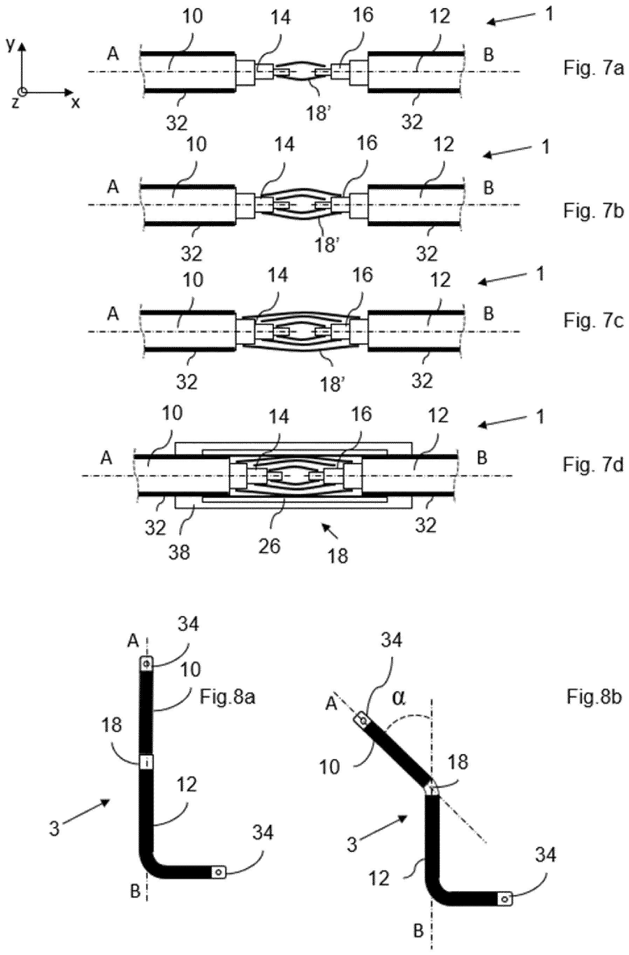

The bus bar joint 1 is intended for a relatively rigid bus bar, resulting in that terminal ends 34 (as will be later discussed with reference to **Fig. 8****)** of the bus bar 3 are easier to fit to connectors of components 30', 30" that are to be connected by the bus bar. In addition, the bus bar joint 1 allows relative movement and/or vibration of the connected components 30', 30" during operation of the interconnected components 30', 30" (after assembly), reducing mechanical strain and stress on the bus bar 3 and the components 30', 30".

The first bus bar portion 10 and the second bus bar portion 12 are described in relation to the first axis A and the second axis B, respectively. It is herein to be understood that since the first bus bar portion 10 and the second bus bar portion 12 are movable in relation to each other, the first axis A and the second axis B are also movable in relation to each other. The first bus bar portion 10 and the second bus bar portion 12 may be pre-shaped, having individual shapes. In some examples only the joint ends 14, 16 of the bus bar portions 10, 12 extend coaxially with the first axis A and the second axis B, respectively.

Directions along the first axis A and/or second axis B may herein be defined as axial directions.

Directions towards and away from the first axis A and/or the second axis B may be defined as radial directions. A radially inner position is closer to the respective axis A, B than a radially outer position.

The first bus bar portion 10 and the second bus bar 12 portion may comprise a solid conductor surrounded by an insulator 32. The first joint end 14 and the second joint end 16 are portions of the conductor that during manufacturing and assembly are exposed, i.e. where the insulator 32 is removed, to allow assembly of the joint ends 14, 16 with the flexible joint element 18.

The flexible joint element 18 is mounted between the first joint end 14 of the first bus bar portion 10 and the second joint end 16 of the second bus bar portion 12. The respective opposite ends of the first bus bar portion 10 and/or the second bus bar portion 12 may, as mentioned hereinbefore, be fitted with connectors for connecting to components 30', 30". Alternatively, at least one of the opposite ends may be arranged with at least one further flexible joint element 18 for attaching to a joint end of a further bus bar portion.

The first j oint end 14 and the second joint end 16 are tapered ends of the conductor of the respective bus bar portions 10, 12, which tapered ends are formed, such as by machining, to have a gradually narrower cross section, as seen along the respective axis A, B, towards a respective axial end of each bus bar portion. Thereby, more surface area of the conductor is exposed and provided, to which surface the flexible joint element 18 may be attached, thereby simplifying attachment and providing a stronger assembly between the joint ends 14, 16 and the joint element 18.

The joint element 18 may be fixedly attached to the tapered ends of the first bus bar portion 10 and the second bus bar portion 12. As such, the joint element 18 is permanently attached to the first bus bar portion 10 and the second bus bar portion 12, providing a bus bar 3 with flexible properties.

The first bus bar portion 10 and the second bus bar portion 12 may be rotationally movable in relation to each other by an angle α between the first axis A and the second axis B. The angle α may be a bending angle between the first axis A and the second axis B. The angle may also be a twisting angle, i.e. twisting of the first bus bar portion 10 and/or the second bus bar portion 12 around its respective axis. The rotational and/or twisting movement enables degrees of freedom when fitting the bus bar 3, comprising the bus bar joint 1, to components 30', 30".

The joint element 18 may comprise a plurality of conductors 18' attached to the tapered ends in layers. In order to enable the bus bar 3 for high current applications a total cross-sectional area, as seen along an axial course of the joint element 18, of the sum of cross-sectional areas of the conductors 18' needs to exceed a minimum threshold area so as to not impede a current flow in the bus bar 3. The flexibility of the bus bar joint 1 requires a plurality of relatively thin conductors 18', instead of a single conductor, to simultaneously enable a sufficient current flow. The particular total cross-sectional area required by the joint element 18 for a predetermined nominal current, such as at least 100 amperes, may readily be determined by conventional methods.

As exemplified in **Figs 2-3****,** the tapered ends may have a stepped profile and the plurality of conductors 18' may be attached to the tapered ends in layers from a radially innermost lower step to a radially outermost higher step. The stepped profile provides flat surfaces which are particularly well suited for the attachment of the plurality of conductors 18'.

**Fig. 2a** shows the joint ends 14, 16 as seen along the respective center axis A, B. The horizontal lines illustrate contours of the stepped profile of the first joint end 14 and the second joint end 16.

**Fig. 2b** is a side view of the bus bar joint 1, where the plurality of conductors 18' of the joint element 18 are shown to be attached to surfaces of the stepped profiles of the joint ends 14, 16. As also shown in **Fig. 2b****,** the bus bar joint 1 may further comprise an electrically insulating sleeve 26 positioned radially outside the joint element 18. The electrically insulating sleeve 26 may extend from the first bus bar portion 10 to the second bus bar portion 12. The joint element 18 and the tapered ends may be covered and electrically insulated from the surroundings by the electrically insulating sleeve 26. The electrically insulating sleeve 26 may further seal the bus bar joint 1 to keep water out of the joint.

The bus bar joint 1 may further comprise an electrically conductive braided sleeve 38 (as will be further discussed with reference to **Fig. 7d****)** positioned radially outside the electrically insulating sleeve 26. The electrically conductive braided sleeve 38 may provide electromagnetic protection of the bus bar joint 1. Due to the braided design, the braided sleeve 38 is flexible and allows bending and twisting of the bus bar joint 1.

**Fig. 3a** and **Fig. 3b** illustrate an example where the first bus bar portion 10 and the second bus bar portion 12 have been assembled with the surfaces of the stepped profiles of the first joint end 14 and the second joint end 16 oriented orthogonally to each other. Such a design may achieve a greater flexibility of movement in some directions as compared the design exemplified by **Fig. 2****,** where the surfaces are assembled in parallel.

**Fig. 3a** shows the joint ends 14, 16 as seen along the respective center axis A, B. The horizontal lines illustrate contours of the stepped profile of the first joint end 14 and the second joint end 16. As illustrated, the stepped profile of the first joint end 14 is oriented orthogonally to the stepper profile of the second joint end 16.

For the sake of clarity of the drawings, the electrically insulating sleeve 26 is not shown in **Fig. 3b****.** However, it is understood to be included in the final assembly bus bar joint 1.

The tapered ends may alternatively have a conical profile and the plurality of conductors 18' may be attached to the tapered ends in layers from a radially innermost conically narrow part to a radially outermost conically broader part, as shown in **Fig. 4b****.** The conical profile may enable greater flexibility in some directions when bending the joint element 18 of the assembled bus bar 3.

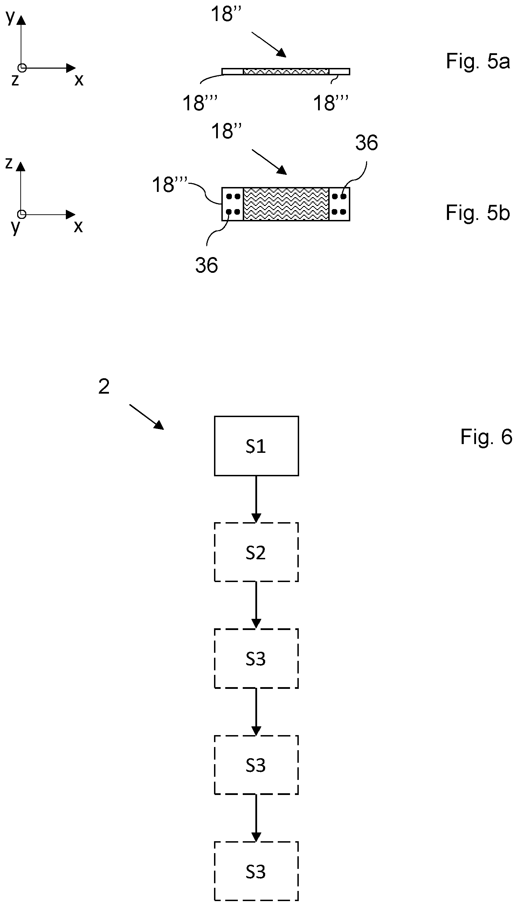

The joint element 18 may comprises a plurality of conductors 18' attached to the tapered ends by fastening elements 36 (see **Fig. 5b****).** As such the plurality of conductors 18' of the joint element 18 may be attached to the tapered ends by bolts, screws, rivets, or clamps, etc.

Alternatively, the joint element 18 may comprise a plurality of conductors 18' attached to the tapered ends by welding. Welding allows permanent attachment of the plurality of conductors 18'.

In some examples, as shown in **Fig. 5a** and **Fig. 5b****,** the plurality of conductors 18' comprise braided bus bars 18". Braided bus bars 18" are commercially available conductors 18' which are woven/braided to form a flexible element. The braided bus bar 18" may have plated terminal ends 18‴ which may comprise (or be provided with) fastening elements 36 for attachment to the tapered ends. The joint element 18 of the present disclosure may have a plurality of braided by bars 18" attached to the tapered ends in layers.

In some examples, the plurality of conductors 18' comprises lamella conductors. Conductive lamellas may be assembled to form a flexible joint element. The joint element 18 shown in **Fig. 2** and **Fig. 4** of the present disclosure may have a plurality of lamellas attached to the tapered ends in layers.

**Fig. 6** exemplifies a method 2 according to the second aspect of the disclosure. The method 2 relates to manufacturing a bus bar joint 1 comprising a first bus bar portion 10, a second bus bar portion 12 and an electrically conductive joint element 18 comprising a plurality of conductors 18'. The first bus bar portion 10 and the second bus bar portion 12' extend coaxially with a first axis A and a second axis B, respectively. The first bus bar portion 10 has a tapered first joint end 14. The second bus bar portion 12 has a tapered second joint end 16. The method 2 comprises attaching S1 the plurality of conductors 18' of the joint element 18 between the tapered first joint end 14 and the tapered second joint end 16. The attachment of the plurality of conductors 18' of the joint element 18 is facilitated by the tapered ends of the first bus bar portion 10 and the second bus bar portion 12.

The method 2 may further comprise mounting S2 a flexible electrically insulating sleeve 26 radially outside the joint element 18. The electrically insulating sleeve 26 may extend from the first bus bar portion 10 to the second bus bar portion 12.

The plurality of conductors 18' may be sequentially attached in layers to the tapered first joint end 14 and to the tapered second joint end 16, from a radially innermost layer to a radially outermost layer. Thereby, the number of conductors comprised by the flexible joint may be increased because the tapered ends enable large surfaces for attachment of conductors 18'. In addition, the tapering enables the conductors 18' to be added in layers, thereby achieving a radially dense assembly of conductors 18', resulting in a larger total cross-sectional area of the plurality of conductors 18', which enables a sufficient current flow while simultaneously maintaining the flexibility of the bus bar joint 1.

The plurality of conductors 18' of the joint element 18 may be attached to the tapered first j oint end 14 and to the tapered second j oint end 16 by fastening elements 36. As such, the plurality of conductors 18' of the joint element 18 may be attached to the tapered ends by bolts, screws, rivets, clamps, etc.

Alternatively, the plurality of conductors 18' of the joint element 18 may be attached to the tapered first joint end 14 and to the tapered second joint end 16 by welding. Welding allows permanent attachment of the plurality of conductors 18'.

The method 2 may further comprise gluing or welding or clamping S3 the flexible electrically insulating sleeve 26 to the first bus bar portion 10 and to the second bus bar portion 12. A watertight permanent seal with the first bus bar portion 10 and the second bus bar portion 12 may thereby be achieved, resulting in a watertight and electrically insulating encapsulation of the flexible bus bar joint 1.

The method may further comprise mounting S4 a flexible electrically conductive braided sleeve 38 radially outside the electrically insulating sleeve 26. The electrically conductive braided sleeve 38 may provide electromagnetic shielding of the bus bar joint 1. Due to its braided design, the braided sleeve 38 is flexible and allows bending and twisting of the bus bar joint 1.

The method 2 may further comprise visually marking S5 the bus bar joint. The marking may indicate that the bus bar comprises a high voltage conductor. The marking may thereby serve as a warning, for instance for users performing service on the components 30', 30" to which the bus bar 3 is connected.

**Figs 7a-7d** illustrate example steps of the method 2. In the examples, a stepped profile of the tapered ends is shown. **Figs 7a-7c** show attaching S1 of the plurality of conductors 18' of the joint element 18 between the tapered first joint end 14 and the tapered second joint end 16. Also shown, is the optional sequential attachment of conductors 18' in layers, starting with a radial innermost layer in **Fig. 7a****,** followed by an intermediate layer in **Fig. 7b** and finished by a radial outermost layer in **Fig. 7c****.**

**Fig. 7d** shows the mounting S2 of the electrically insulating sleeve 26, which if followed by the mounting S4 of the electrically conductive braided tube 38 radially outside the electrically insulating sleeve 26.

The step of visually marking S5 the bus bar joint 1 is not illustrated as it may be done in a number of ways.

**Fig. 8a** and **Fig. 8b** show the bus bar 3 comprising at least one bus bar joint 1 having the joint element 18 according to any one of the examples of the first aspect of the disclosure. The bus bar 3 may comprise a plurality of bus bar portions 10, 12 connected by at least one bus bar joint 1 according to the first aspect of the disclosure. The bus bar 3 may thus comprise a plurality of flexible bus bar joints 1.

The bus bar 3 may comprise terminal ends 34, which may be provided with connectors for connecting to components 30', 30" of a vehicle 4.

Fig. 8a and Fig 8b further illustrate the flexible properties of the bus bar joint 1, where for instance the first bus bar portion 10 may be rotated an angle α in relation to the second bus bar portion. In other words, the first axis A may be rotated an angle α in relation to the second axis B thanks to the bus bar joint 1 and its flexible joint element 18.

### List of Examples

1. A bus bar joint 1 for high-current applications, the bus bar joint comprising:
   - a first bus bar portion 10 extending along a first center axis A, the first bus bar portion 10 having a first joint end 14,
   - a second bus bar portion 12 extending along a second center axis B, the second bus bar portion 12 having a second joint end 16,
   - a flexible electrically conductive joint element 18 mechanically and electrically connecting the first joint end 14 of the first bus bar portion 10 to the second joint end 16 of the second bus bar portion 12, and
   wherein the first j oint end 14 and the second joint 16 end are tapered ends of the first bus bar portion 10 and the second bus bar portion 12, respectively, and wherein the joint element 18 is configured to enable the first bus bar portion 10 and the second bus bar portion 12 to be movable in relation to each other.
2. The bus bar joint 1 of example 1, wherein the joint element 18 is fixedly attached to the tapered ends of the first bus bar portion 10 and the second bus bar portion 12.
3. The bus bar joint 1 of example 1 or 2, wherein the first bus bar portion 10 and the second bus bar portion 12 are rotationally movable in relation to each other by an angle α between the first center axis A and the second center axis B.
4. The bus bar joint 1 of any one of examples 1-3, wherein the joint element 18 comprises a plurality of conductors 18' attached to the tapered ends in layers.
5. The bus bar joint 1 of example 4, wherein the tapered ends have a stepped profile and wherein the plurality of conductors 18' are attached to the tapered ends in layers from a radially innermost lower step to a radially outermost higher step.
6. The bus bar joint 1 of example 4, wherein the tapered ends have a conical profile and wherein the plurality of conductors 18' are attached to the tapered ends in layers from a radially innermost conically narrow part to a radially outermost conically broader part.
7. The bus bar joint 1 of any one of examples 1-6, wherein the joint element 18 comprises a plurality of conductors 18' attached to the tapered ends by fastening elements 22.
8. The bus bar joint 1 of any one of examples 1-6, wherein the joint element 18 comprises a plurality of conductors 18' attached to the tapered ends by welding.
9. The bus bar joint 1 of any one of examples 4-8, wherein the plurality of conductors comprises braided bus bars 24.
10. The bus bar joint 1 of any one of examples 4-8, wherein the plurality of conductors comprises lamella conductors. Conductive lamellas may be assembled to form a flexible joint element. The joint element of the present disclosure may have a plurality of lamellas attached to the tapered ends in layers.
11. The bus bar joint 1 of any one of examples 1-10, further comprising an electrically insulating sleeve 26 positioned radially outside the joint element 18, the electrically insulating sleeve 26 extending from the first bus bar portion 10 to the second bus bar portion 12.
12. The bus bar joint 1 of example 11, further comprising an electrically conductive braided tube 28 positioned radially outside the electrically insulating sleeve 26.
13. The bus bar joint 1 of any one of examples 1-12, wherein the bus bar joint 1 is configured for a nominal current of at least 100 amperes.
14. A method 2 of manufacturing a bus bar joint 1 comprising a first bus bar portion 10, a second bus bar portion 12 and an electrically conductive joint element 18 comprising a plurality of conductors 18', the first bus bar portion 10 and the second bus bar portion 12 extending along a first center axis A and a second center axis B, respectively, the first bus bar portion 10 having a tapered first joint end 14, the second bus bar portion 12 having a tapered second joint end 16, the method comprising:
   - attaching S1 the plurality of conductors 18' of the joint element 18 between the tapered first j oint end 14 and the tapered second j oint end 16.
15. The method 2 of example 14, further comprising mounting S2 a flexible electrically insulating sleeve 26 radially outside the joint element 18, the electrically insulating sleeve 26 extending from the first bus bar portion 10 to the second bus bar portion 12.
16. The method 2 according to example 14 or 15, wherein the plurality of conductors 18' are sequentially attached in layers to the tapered first joint end 14 and to the tapered second joint end 16, from a radially innermost layer to a radially outermost layer.
17. The method 2 according to any one of examples 14-16, wherein the plurality of conductors 18' of the joint element 18 are attached to the tapered first joint end 14 and to the tapered second joint 16 end by fastening elements 22.
18. The method 2 according to any one of examples 14-16, wherein the plurality of conductors 18' of the joint element 18 are attached to the tapered first joint end 14 and to the tapered second joint 16 end by welding.
19. The method 2 according to examples 15, further comprising gluing or welding or clamping S3 the flexible electrically insulating sleeve 26 to the first bus bar portion 10 and to the second bus bar portion 12.
20. The method 2 according to example 15, further comprising mounting S4 a flexible electrically conductive braided tube 28 radially outside the electrically insulating sleeve 26.
21. The method 2 according to any one of examples 14-20, further comprising visually marking S5 the bus bar joint 1.
22. A bus bar 3 comprising at least one bus bar joint 1 according to any one of examples 1-13.
23. A vehicle, vessel or stationary machinery 4 comprising the bus bar 3 of example 22.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A bus bar joint (1) for high-current applications, the bus bar joint comprising:
- a first bus bar portion (10) extending along a first center axis (A), the first bus bar portion (10) having a first joint end (14),
- a second bus bar portion (12) extending along a second center axis (B), the second bus bar portion (12) having a second joint end (16),
- a flexible electrically conductive joint element (18) mechanically and electrically connecting the first joint end (14) of the first bus bar portion (10) to the second joint end (16) of the second bus bar portion (12), and
wherein the first joint end (14) and the second joint (16) end are tapered ends of the first bus bar portion (10) and the second bus bar portion (12), respectively, and wherein the joint element (18) is configured to enable the first bus bar portion (10) and the second bus bar portion (12) to be movable in relation to each other.

2. The bus bar joint (1) of claim 1, wherein the joint element (18) is fixedly attached to the tapered ends of the first bus bar portion (10) and the second bus bar portion (12).

3. The bus bar joint (1) of claim 1 or 2, wherein the first bus bar portion (10) and the second bus bar portion (12) are rotationally movable in relation to each other by an angle (α) between the first center axis (A) and the second center axis (B).

4. The bus bar joint (1) of any one of claims 1-3, wherein the joint element (18) comprises a plurality of conductors (18') attached to the tapered ends in layers.

5. The bus bar joint (1) of claim 4, wherein the tapered ends have a stepped profile and wherein the plurality of conductors (18') are attached to the tapered ends in layers from a radially innermost lower step to a radially outermost higher step.

6. The bus bar joint (1) of claim 4, wherein the tapered ends have a conical profile and wherein the plurality of conductors (18') are attached to the tapered ends in layers from a radially innermost narrow part to a radially outermost broader part.

7. The bus bar joint (1) of any one of claims 4-6, wherein the plurality of conductors comprises braided bus bars (24).

8. The bus bar joint (1) of any one of claims 1-7, further comprising an electrically insulating sleeve (26) positioned radially outside the joint element (18), the electrically insulating sleeve (26) extending from the first bus bar portion (10) to the second bus bar portion (12).

9. The bus bar joint (1) of claim 8, further comprising an electrically conductive braided tube (28) positioned radially outside the electrically insulating sleeve (26).

10. A method (2) of manufacturing a bus bar joint (1) comprising a first bus bar portion (10), a second bus bar portion (12) and an electrically conductive joint element (18) comprising a plurality of conductors (18'), the first bus bar portion (10) and the second bus bar portion (12) extending along a first center axis (A) and a second center axis (B), respectively, the first bus bar portion (10) having a tapered first joint end (14), the second bus bar portion (12) having a tapered second joint end (16), the method comprising:
- attaching (S1) the plurality of conductors (18') of the joint element (18) between the tapered first joint end (14) and the tapered second joint end (16).

11. The method (2) of claim 10, further comprising mounting (S2) a flexible electrically insulating sleeve (26) radially outside the joint element (18), the electrically insulating sleeve (26) extending from the first bus bar portion (10) to the second bus bar portion (12).

12. The method (2) according to claim 10 or 11, wherein the plurality of conductors (18') are sequentially attached in layers to the tapered first joint end (14) and to the tapered second joint end (16), from a radially innermost layer to a radially outermost layer.

13. The method (2) according to claim 11, further comprising mounting (S4) a flexible electrically conductive braided tube (38) radially outside the electrically insulating sleeve (26).

14. A bus bar (3) comprising at least one bus bar joint (1) according to any one of claims 1-9.

15. A vehicle, vessel or stationary machinery (4) comprising the bus bar (3) of claim 14.
